(19) **Europäisches Patentamt**
**European Patent Office**
**Office européen des brevets**

(11) **EP 3 490 168 B1**

(12) # EUROPEAN PATENT SPECIFICATION

(45) Date of publication and mention
of the grant of the patent:
**10.06.2020 Bulletin 2020/24**

(51) Int Cl.:
***H04B 10/532*** *(2013.01)*   ***H04B 10/61*** *(2013.01)*
***H04J 14/06*** *(2006.01)*

(21) Application number: **17306631.7**

(22) Date of filing: **23.11.2017**

(54) **SINGLE PHOTODIODE OPTICAL FULL FIELD DETECTOR**

EINZELNER OPTISCHER PHOTODIODENDETEKTOR

DÉTECTEUR PLEIN CHAMP OPTIQUE À PHOTODIODE UNIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.05.2019 Bulletin 2019/22**

(73) Proprietor: **Nokia Solutions and Networks Oy
02610 Espoo (FI)**

(72) Inventors:
• **RIOS MÜLLER, Rafael**
**91620 Nozay (FR)**
• **RENAUDIER, Jeremie**
**91620 Nozay (FR)**
• **ESTARAN, José**
**91620 Nozay (FR)**

(74) Representative: **Novagraaf Technologies
Bâtiment O2
2, rue Sarah Bernhardt
CS90017
92665 Asnières-sur-Seine Cedex (FR)**

(56) References cited:
**US-B1- 9 325 423**

• **RIOS-MULLER RAFAEL ET AL: "Dual
polarization in-phase and quadrature high speed
submarine transmission with only two
photodiodes, ADCs, MZMs and DACs", 2017 IEEE
PHOTONICS CONFERENCE (IPC) PART II, IEEE,
1 October 2017 (2017-10-01), pages 1-2,
XP033318304, DOI: 10.1109/PC2.2017.8283358
[retrieved on 2018-02-05]**

**Description**

**Field of the Invention**

The present invention relates to an optical full field detector adapted to simultaneously detect the phase and amplitude of the polarization states of an incoming optical signal.

**Background**

From high-speed data communications, to metrology, physical security, cosmology, audio systems, or even our car's auto-parking/driving systems, optical field detection is actively leveraged in our daily lives. Like any other electromagnetic field, the properties of the full optical field (i.e. herein defined as an electromagnetic field) are fully described by four independent, and potentially detectable, parameters or dimensions: amplitude and phase in each of the two orthogonal states of polarization.

Each of the discussed dimensions potentially conveys independent information, thus offering uncoupled perspectives of the same content that will always improve/accelerate its interpretation/demodulation as compared to single-dimension systems (e.g. detecting the intensity of the field only); exactly like color and shape cooperate to better identify an object when we observe it. In this regard, low-cost full optical-field detection is desirable in a large range of the applications.

For example, in telecommunication, the frequency range of the optical signals transmitted and data processed is usually the infra-red frequency range.

The employed detection techniques as of today elude a suitable trade-off between the number of dimensions that they can track and their cost and hardware complexity. There are two main schemes/methods: direct detection and polarization-diversity coherent detection.

Direct detection

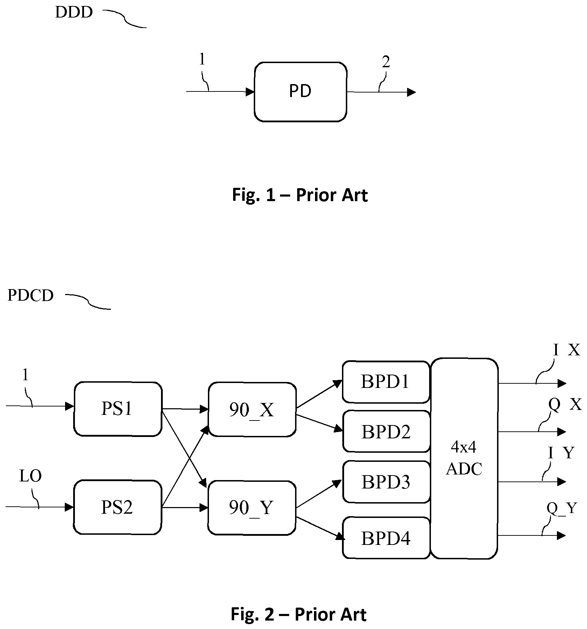

**Figure 1** represents a direct detection device DDD consisting of a photodiode PD. The photodiode PD receives an optical signal and converts the photons of the optical signal 1 into an electrical current 2 that is proportional to the intensity of the optical signal's field 1.

Such process is called optical intensity detection.

Clearly, the hardware and cost are at its minimum, but we are measuring one out of available dimensions.

Polarization-diversity coherent detection

In order to capture further field's properties than its power (or intensity), it is necessary to perform prior manipulation of the optical signal 1 at the detector front-end. "Dual Polarization In-Phase and Quadrature High Speed Submarine Transmission with Only Two Photodiodes, ADCs, MZMs and DACs", R. Müller, J. Esteran et al., Photonics Conference (IPC), Part II, 2017 IEEE discloses dual polarization detection with only two photodiodes, two analog to- digital converters, two Mach-Zehnder modulators and two digital-to-analog converters, one laser based on joint in-phase/quadrature generation and detection. The transmitter generates one signal per polarization instead of a real and imaginary signal per polarization as standard polarization multiplexing transmitters do.

**Figure 2** represents a polarization-diversity coherent detector PDCD.

This detector PDCD consists of a local oscillator LO, two polarization splitters PS1 and PS2, two 90° optical hybrid 90_X and 90_Y, four balanced photodiodes BPD1 to BPD4, and a 4x4 analog-to-digital converter ADC (four inputs and four outputs).

The purpose is to project the four characteristic dimensions of the optical signal 1 to analyse into several photodiodes BPD1 to BPD4, each capturing the properties of the field in various complementary intensity vectors.

To do this, the polarization states X and Y constituting the optical signal 1 are split by one of the polarization splitter PS1. The same thing is done with the polarization states X and Y of the local oscillator LO, that is a well-known and controlled signal, by the other polarized splitter PS2.

The signals polarized according to X are sent into one of the 90° optical hybrid 90_X and the signals polarized according to Y are sent into one of the 90° optical hybrid 90_Y.

Each 90° optical hybrid 90_X and 90_Y will split the signal coming from the local oscillator in two identical sub-signals as well as for the signal coming from the optical signal to analyse. Then the 90° optical hybrid 90_X and 90_Y will combine one of the sub-signal coming from the local oscillator with one of the sub-signal coming from the optical signal and it will phase shift by 90° the other sub-signal coming from the local oscillator before combining it to the other sub-signal coming from the optical signal.

Thus two combined signals are obtained at the output of the each 90° optical hybrid, representing four signals that are sent into the balanced photodiode to be converted into electrical signals that will be converted into digital signal by the 4x4 analog-to-digital converter so as to be analyser.

The four digital signals obtained I_X, Q_X, I_Y and Q_Y respectively correspond to the in-phase of the optical signal 1 in polarization X, the quadrature of the optical signal 1 in polarization X, the in-phase of the optical signal 1 in polarization Y, and the quadrature of the optical signal 1 in polarization Y. Thus, these four digital signals obtained enable to recover the amplitude and phase of both polarization states of the optical signal 1 which correspond to the full detection or the four parameters or dimensions of the optical signal 1.

In this case, the dimensional diversity is maximum, but we are adding a substantial amount of pieces of hardware and post-detection digital signal processing that surely increases the cost, the power consumption, and the form factor; making this receiver structure prohibitive in, for instance, low-profile sensing applications or cost-critical short-reach Datacom systems

So there is a need for an optical full field detector that makes possible full-diversity field detection at a reduced cost and hardware.

**Summary**

The present invention proposes an optical full field detector for an incoming optical signal to solve the prior art drawbacks.

When the incoming optical signal has a central frequency $f_0$ and a bandwidth B and comprises n polarization states, n being an integer comprised between [0; 2]. When n=1 the incoming optical signal has one polarization state along a first or a second direction, when n=2 the incoming optical signal has two polarization states, one along the first direction and the other along the second direction, the first and second direction being orthogonal, otherwise n=0.

In a first and general embodiment, the optical full field detector is adapted to simultaneously detect the phase and amplitude of the polarization states of the incoming optical signal, and comprises:

- a polarization beam splitter adapted to receive and split the incoming optical signal in two polarized signals by separating the polarization states along the first and second directions;
- a first laser polarized along the first direction and having a predetermined frequency $f_1$;
- a second laser polarized along the second direction and having a predetermined frequency $f_2$;
- a first and a second polarization maintaining coupler;
- a polarization beam combiner;
- one opto-electronic converter;
- one analog-to-digital converter; and
- a digital signal processor,

wherein

- the first polarization maintaining coupler is adapted to couple the polarized signal along the first direction of the incoming optical signal with the first laser and maintain the polarization along the first direction of this first obtained signal, and the second polarization maintaining coupler is adapted to couple the polarized signal along the second direction of the incoming optical signal with the second laser and maintain the polarization along the second direction of this second obtained signal;
- the polarization beam combiner is adapted to combine the first and second obtained signals into a coupled optical signal;
- the opto-electronic converter is adapted to receive and convert the coupled optical signal into an electrical signal;
- the analog-to-digital converter is adapted to receive and convert the electrical signal into a digital signal; and
- the digital signal processor is adapted to receive the digital signal and to extract from the digital signal the phase and amplitude of the n polarization states of the incoming optical signal.

Advantageously, the optical full field detector further comprises the following technical features taken alone or in combination:

the predetermined frequencies $f_1$ and $f_2$ respect one of the following equations :

○

$$f_1 \leq f_0 - B/2 \text{ and } f_2 \leq f_1 - B ;$$

or

°

$$f_1 \leq f_0 - B/2 \text{ and } f_2 \geq f_0 + |f_0\text{-}f_1| + B;$$

or

°

$$f_1 \geq f_0 + B/2 \text{ and } f_2 \geq f_1 + B;$$

or

°

$$f_1 \geq f_0 + B/2 \text{ and } f_2 \leq f_0 - |f_0\text{-}f_1| - B;$$

the first direction is horizontal and the second direction is vertical or reciprocally the first direction is vertical and the second direction is horizontal;

the digital signal processor further comprises:

- a first filter adapted to filter a constant value of the digital signal;
- a coupler adapted to divide the digital signal obtained at the output of the first filter into two identical sub-digital signals;
- a first and a second shifting elements; and
- a first and second low pass filters having a cut-off frequency $f_c$ approximatively equal to B/2,

wherein,

- the first shifting element is adapted to shift in frequency one of the sub-digital signal so that the first low pass filter is adapted to filter the part of the sub-digital signal which contains the information of the phase and amplitude of the polarization state along the first direction of the incoming optical signal; and
- the second shifting element is adapted to shift in frequency the other sub-digital signal so that the second low pass filter is adapted to filter the part of the sub-digital signal which contains the information of the phase and amplitude of the polarization state along the second direction of the incoming optical signal; and/or

when the incoming optical signal comprises p multiplexed optical signals, p being an integer, each optical signals having a central frequency $f_{0p}$ and a bandwidth $B_p$ and comprising n polarization states, n being an integer comprised between [0; 2], when n=1 the optical signal has one polarization state along a first or a second direction, when n=2 the optical signal has two polarization states, one along the first direction and the other along the second direction, the first and second direction being orthogonal, otherwise n=0;

- the polarization beam splitter is replaced by a demultiplexer adapted to demultiplex the incoming optical signal into 2p demultiplexed signals, p demultiplexed signals having a polarization state along the first direction and p demultiplexed signals having a polarization state along the second direction;
- the first laser is replaced by p first lasers polarized along the first direction, each p first laser having predetermined frequency $f_{1p}$;
- the second laser is replaced by p second lasers polarized along the second direction, each p second laser having predetermined frequency $f_{2p}$;
- the first and second polarization maintaining couplers are replaced by p first and p second polarization maintaining couplers, wherein the p first polarization maintaining couplers are adapted to couple the p polarized signals along the first direction of the incoming optical signal with the first p lasers and maintain the polarization along the first direction of these p first obtained signals, and the p second polarization maintaining couplers are adapted to couple the p polarized signals along the second direction of the incoming optical signal with the second p lasers and maintain the polarization along the second direction of these p second obtained signals;

- the polarization beam combiner is replaced by a multiplexer adapted to multiplex the first and second p obtained signals into the coupled optical signal; and wherein
- the digital signal processor is adapted to extract from the digital signal the phase and amplitude of the n*p polarization states of the incoming optical signal.

The present invention also proposes an encoding method for encoding an incoming optical signal.

In a first and general embodiment of the encoding method, when the said incoming optical signal having a central frequency $f_0$ and a bandwidth B and comprising n polarization states, n being an integer comprised between [0; 2], when n=1 the incoming optical signal has one polarization state along a first or a second direction, when n=2 the incoming optical signal has two polarization states, one along the first direction and the other along the second direction, the first and second direction being orthogonal, otherwise n=0, the encoding method comprising:

- a polarization separating step wherein the polarizations along the first and second direction of the incoming optical signal are separated into a polarized signal along the first direction and a polarized signal along the second direction; and in parallel
- a first coupling step wherein the polarized signal along the first direction is coupled to a first laser, the first laser being polarized along the first direction and having a predetermined frequency $f_1$
- a second coupling step wherein the polarized signal along the second direction is coupled to a second laser, the second laser being polarized along the second direction and having a predetermined frequency $f_2$; then
- a combining step wherein the coupled signal obtained by the first and second coupling steps are combined together by a polarization beam combiner.

Advantageously, the encoding method further comprises the following technical features taken alone or in combination:

the predetermined frequencies $f_1$ and $f_2$ respect one of the following equations :

  ○

$$f_1 \leq f_0 - B/2 \text{ and } f_2 \leq f_1 - B ;$$

  or

  ○

$$f_1 \leq f_0 - B/2 \text{ and } f_2 \geq f_0 + |f_0-f_1| + B;$$

  or

  ○

$$f_1 \geq f_0 + B/2 \text{ and } f_2 \geq f_1 + B;$$

  or

  ○

$$f_1 \geq f_0 + B/2 \text{ and } f_2 \leq f_0 - |f_0-f_1| - B;$$

the first direction is horizontal and the second direction is vertical or reciprocally the direction is vertical and the second direction is horizontal;

an optical to analogical conversion step wherein the optical combined signal obtained after the combining step is converted into an electrical signal by an opto-electronic converter; and/or

an analogical to digital conversion step wherein the electrical signal obtained after the optical to analogical conversion step is converted into a digital signal by an analog-to-digital converter.

The present invention further proposes a decoding method for and incoming optical signal encoded according to the encoding method previously cited.

In a first and general embodiment of the decoding method, the decoding method comprises:

- a first filtering step wherein the continuous component of the digital signal obtained at the end of the encoding method is filtered;
- a dividing step wherein the filtered signal obtained after the first filtering step is divided into two identical sub-digital signals by a coupler; and in parallel
- a first analyzing step wherein one of the sub-digital signals is shifted in frequency so that a first low pass filter, having a cut-off frequency $f_c$ approximately equal to B/2, be adapted to filter the part of the sub-digital signal which contains the information of the phase and amplitude of the polarization state along the first direction of the incoming optical signal; and
- a second analyzing step wherein the other sub-digital signal is shifted in frequency so that a second low pass filter, having a cut-off frequency $f_c$ approximately equal to B/2, be adapted to filter the part of the sub-digital signal which contains the information of the phase and amplitude of the polarization state along the second direction of the incoming optical signal.

**Brief Description of the Drawings**

Some embodiments of apparatus or process in accordance with embodiments of the present invention are now described, by way of example only, and with reference to the accompanying drawings, in which :

- Figure 1 schematically illustrates a well-known direct detection device;
- Figure 2 schematically illustrates a well-known polarization-diversity coherent detector;
- Figure 3 schematically illustrates a first embodiment of an optical full field detector according to the invention;
- Figure 4 schematically illustrates the frequency response of an optical signal to be detected;
- Figure 5 schematically illustrates the frequency response of the optical signal of Figure 4 after the addition of two tones with frequencies $f_1$ and $f_2$;
- Figure 6 schematically illustrates the frequency response of the current of a opto-electronic converter after opto-electronic conversion of the signal of Figure 5;
- Figure 7 schematically illustrates an embodiment of a digital signal processor for an optical full field detector according to the invention;
- Figures 8a to 8d schematically illustrate the amplitude of the frequency response of a digital signal passing through the digital signal processor DSP of Figure 7;
- Figures 9a and 9b schematically illustrate the amplitude of the frequency response of a sub-digital signal passing through a portion of the digital signal processor DSP of Figure 7;
- Figure 10 schematically illustrates a second embodiment of an optical full field detector according to the invention;
- Figure 11 schematically illustrates the chart of an encoding method according to the invention; and
- Figure 12 schematically illustrates the chart of a decoding method according to the invention.

**Description of Embodiments**

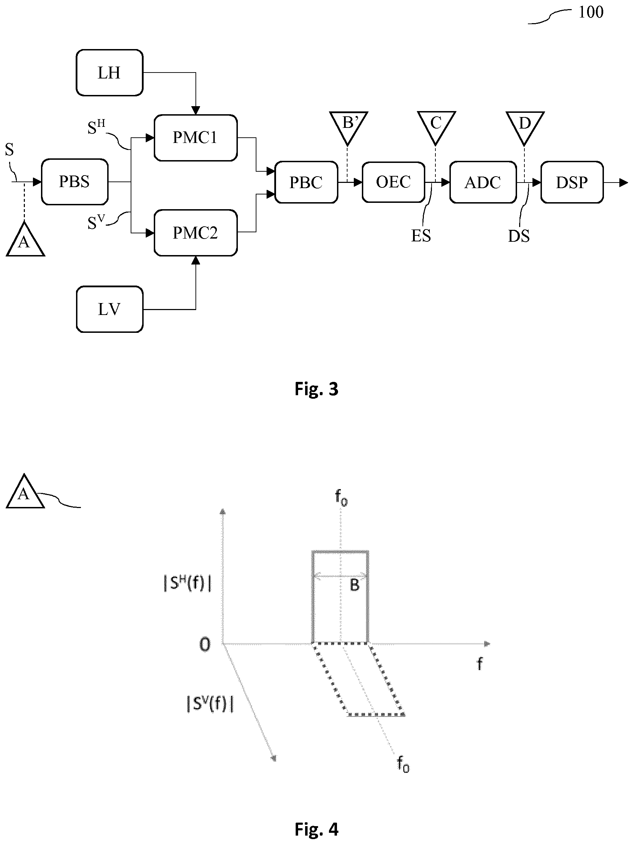

In a first and general embodiment, an optical full field detector 100 for an incoming signal S, schematically illustrated in **Figure 3,** is adapted to simultaneously detect the phase and amplitude of the polarization states of the incoming optical signal S.

As illustrated in **Figure** 4 which corresponds to the measurement point A in **Figure 3,** the incoming optical signal S to be detected has a central frequency $f_0$ and a bandwidth B and may comprise n polarization states, n being an integer comprised between [0; 2].

When n=1 the incoming optical signal S has one polarization state along a first H or a second V direction, when n=2 the incoming optical signal S has two polarization states, one along the first direction H and the other along the second direction V, the first and second direction being orthogonal, otherwise n=0.

The signals in the two polarization can be described as:

$$s^H(t) = \text{Re}\{s^H_{bb}(t)*\exp(j2\pi f_0 t)\} \qquad (Eq1)$$

$$s^V(t) = \text{Re}\{s^V_{bb}(t)* \exp(j2\pi f_0 t)\} \qquad (Eq2)$$

Where:

$s^H(t)$ and $s^V(t)$ are the signals in the first and second direction of polarization respectively;
the central frequency of the signal carrier is denoted as $f_0$ which is typically around 194 THz for communications applications;
exp(.) denotes the exponential operator;
Re{.} is the real part of a complex signal.

Finally, $s^H_{bb}(t)$ and $s^V_{bb}(t)$ are the complex baseband signals in both polarizations (these complex signals are made by the in-phase and quadrature components, therefore there are four independent dimensions considering the two polarizations).

And, also introduced is the Fourier transform operator F{.}:

$$S^H(f) = F\{s^H(t)\} \qquad (Eq3)$$

$$S^V(f) = F\{s^V(t)\} \qquad (Eq4)$$

So, in the case where n=1, the frequency response of the incoming optical signal S has one of its amplitude $|S^H(f)|$, which corresponds to the amplitude of along the first direction H, or $|S^V(f)|$, which corresponds to the amplitude of along the second direction V, equal to zero. Whereas, when n=2, both amplitudes $|S^H(f)|$ and $|S^V(f)|$ are different from zero.

To facilitate the demonstration, both amplitudes $|S^H(f)|$ and $|S^V(f)|$ will be taken, for the rest of the description, different from zero and constant in the frequency range $[f_0 - B/2; f_0 + B/2]$ as shown in **Figure 4.** However, the operating principle described below can be generalized to other types of variation and values of the amplitudes $|S^H(f)|$ and $|S^V(f)|$.

It is to be noted that the negative frequencies containing the same information as the positive ones, they are not represented on the chart.

Thus, the signal in each polarization is bandlimited to a total bandwidth of B and:

$$S^H(f) = 0, \text{ if } f > f_0 + B/2 \text{ or } f < f_0 - B/2 \qquad (Eq5)$$

$$S^V(f) = 0, \text{ if } f > f_0 + B/2 \text{ or } f < f_0 - B/2 \qquad (Eq6)$$

B is typically a few GHz for optical communications applications.

In reference to **Figure 3,** the optical full field detector 100 comprises:

- a polarization beam splitter PBS adapted to receive and split the incoming optical signal S in two polarized signals by separating the polarization states along the first H and second V directions;
- a first laser LH polarized along the first direction H and having a predetermined frequency $f_1$;
- a second laser LV polarized along the second direction V and having a predetermined frequency $f_2$;
- a first and a second polarization maintaining coupler PMC1 and PMC2;
- a polarization beam combiner PBC;
- one opto-electronic converter OEC;
- one analog-to-digital converter ADC; and
- a digital signal processor DSP.

The first polarization maintaining coupler PMC1 is adapted to couple the polarized signal along the first direction H of the incoming optical signal S with the first laser LH (also called "tone 1") and maintain the polarization along the first direction H of this first obtained signal.

The second polarization maintaining coupler PMC2 is adapted to couple the polarized signal along the second direction V of the incoming optical signal S with the second laser LV (also called "tone 2") and maintain the polarization along the second direction V of this second obtained signal.

The polarization beam combiner is adapted to combine (or multiplex) the first and second obtained signals into a coupled optical signal.

The resulting signals $y^H(t)$ and $y^V(t)$ after tone addition are:

$$y^H(t) = s^H(t) + A_1 * \cos(j2\pi f_1 t) \qquad \text{(Eq7)}$$

$$y^V(t) = s^V(t) + A_2 * \cos(j2\pi f_2 t) \qquad \text{(Eq8)}$$

Where $A_1$ and $A_2$ are respectively the amplitude of the tone 1 and of the tone 2.

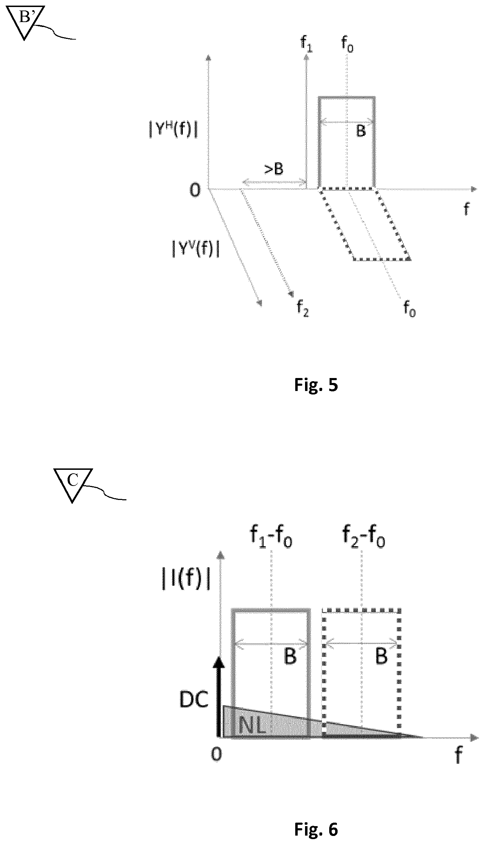

**Figure 5** illustrates the frequency response of coupled optical signal, at the measurement point B' in **Figure 3,** which corresponds to the incoming optical signal S of **Figure 4** after the addition of the two tones with frequencies $f_1$ and $f_2$.

Then, the opto-electronic converter OEC is adapted to receive and convert the coupled optical signal into an electrical signal ES.

For example the opto-electronic converter OEC can be a photodiode.

The output I(t) of the opto-electronic converter OEC corresponding to the electrical signal ES can be written as follow:

$$I(t) \propto |y^H(t)|^2 + |y^v(t)|^2 \qquad \text{(Eq9)}$$

which after some development becomes

$$I(t) \propto DC + Re\{s^H_{bb}(t) * \exp[j2\pi (f_0-f_1)t]\} + Re\{s^V_{bb}(t) * \exp[j2\pi (f_0-f_2)t]\} + NL$$

$$\text{(Eq10)}$$

where:

$\propto$ is the proportional operator, meaning that the current of the opto-electronic converter OEC is proportional to these terms;

DC is a constant value coming from the power of the tones that can be easily filtered, followed by the two signals of interest (signal to tone beatings) and finally a nonlinear term NL coming from signal-to-signal beatings which can be treated as a small interference if tone to signal ratio is very high, or be partially compensated using nonlinear equalizers.

The resulting amplitude of the frequency response of the electrical signal ES, corresponding to measurement point C in **Figure 3,** is shown in **Figure 6.**

After the opto-electronic conversion, the analog-to-digital converter ADC is adapted to receive and convert the electrical signal ES into a digital signal DS. The analog-to-digital converter ADC samples the electrical signal ES obtained at the output of opto-electronic at a frequency $f_s$ per second before converting it into a digital signal DS. Typically, the frequency $f_s$ is in the order of tens of giga samples per second for communications applications.

Then, the digital signal processor DSP is adapted to receive the digital signal DS and to extract from the digital signal DS the phase and amplitude of the n polarization states of the incoming optical signal S.

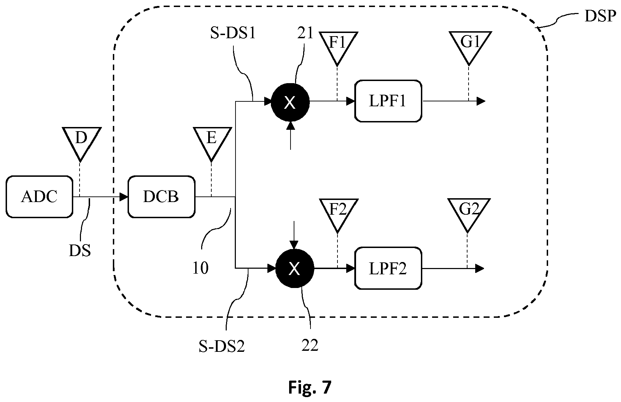

**Figure 7** illustrates a digital signal processor DSP according to an embodiment that can be used in the first and general embodiment of the optical full field detector.

The following description of the digital signal processor DSP is a description of the functional blocks however it is to be noted that it can be realized by means of a software.

In this digital signal processor DSP embodiment, the digital signal processor DSP comprises:

- a first filter DCB, or Direct Coupling Blocker, adapted to filter a constant value DC of the digital signal DS;
- a coupler 10 adapted to divide the digital signal DS obtained at the output of the first filter DCB into two identical sub-digital signals
- a first and a second shifting elements 21 and 22; and
- a first and second low pass filters LPF1 and LPF2 having a cut-off frequency $f_c$ approximatively equal to B/2.

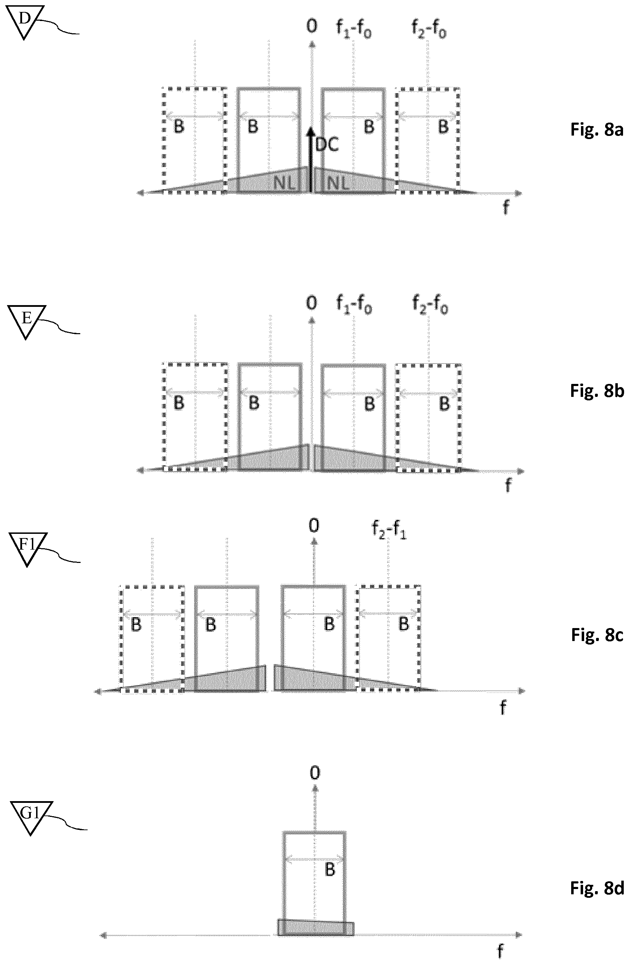

**Figures 8a to 8c** show the amplitude of the frequency response in each step of the process performed in the digital signal processor DSP.

**Figure 8a** illustrates the amplitude of the frequency response of the digital signal DS at the measurement point D in **Figures 3 and 7** which corresponds to the input of the digital signal processor DSP. Both positive and negative frequencies are represented here. The diagram is similar to the one of **Figure 6.** For real signals the spectral content in the negative frequencies of the frequency response has the same content as the positive frequencies thus the amplitude of the frequency response is symmetric.

Thus, at frequency 0 Hz, we see the constant value DC coming from the power of the tones 1 and 2. A first block centered around frequency $(f_1 - f_0)$ Hz and its symmetrical block centered around frequency $- (f_1 - f_0)$ Hz, both having a bandwidth of B, correspond to the combination of the part of the incoming signal S polarized along the first direction H and the first laser LH. A second block centered around frequency $(f_2 - f_0)$ Hz and its symmetrical block centered around frequency $- (f_2 - f_0)$ Hz, both having a bandwidth of B, correspond to the combination of the part of the incoming signal polarized along the second direction V and the second laser LV.

**Figure 8b** illustrates the amplitude of the frequency response of the digital signal DS at the measurement point E in **Figure 7** which corresponds to the output of the first filter DCB, so after the filtering of the constant value DC of the digital signal DS.

The first shifting element 21 is adapted to shift in frequency one of the sub-digital signal S-DS1 so that the first low pass filter LPF1 is adapted to filter the part of the sub-digital signal which contains the information of the phase and amplitude of the polarization state along the first direction H of the incoming optical signal S.

**Figure 8c** illustrates the amplitude of the frequency response of this sub-digital signal S-DS1 at the measurement point F1 in **Figure 7,** so after its shifting in frequency at the output of the first shifting element 21 also corresponding to the input of the first low pass filter LPF1.

Finally, **Figure 8d** illustrates the amplitude of the frequency response of the sub-digital signal S-DS1 at the measurement point G1 in **Figure 7,** which corresponds to the output of the first low pass filter LPF1, so after its shifting in frequency by the first shifting element 21 and its filtering by the first low pass filter LPF1. This signal is complex-valued and contains in-phase and quadrature components of polarization state of the incoming optical signal S along the first direction H.

In the same way, the second shifting element 22 is adapted to shift in frequency the other sub-digital signal S-DS2 so that the second low pass filter LPF2 is adapted to filter the part of the sub-digital signal S-DS2 which contains the information of the phase and amplitude of the polarization state along the second direction V of the incoming optical signal S.

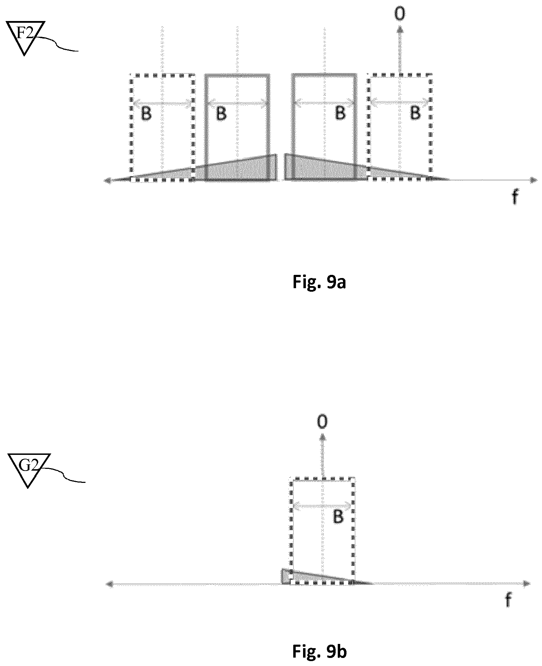

**Figure 9a** illustrates the amplitude of the frequency response of this sub-digital signal S-DS2 at the measurement point F2 in **Figure 7,** so after its shifting in frequency at the output of the second shifting element 22 also corresponding to the input of the second low pass filter LPF2.

**Figure 9b** illustrates the amplitude of the frequency response of the sub-digital signal S-DS2 at the measurement point G2 in **Figure 7** which corresponds to the output of the second low pass filter LPF2, so after its shifting in frequency by the second shifting element 22 and its filtering by the second low pass filter LPF2. This signal is complex-valued and contains in-phase and quadrature components of polarization state of the incoming optical signal S along the second direction V.

The shift in frequency is realized by multiplying the first sub-digital signal S-DS1 by an exponential with frequency $(f_1-f_0)$ for the polarisation along the first direction H, and by multiplying the second sub-digital signal S-DS2 by an exponential with frequency $(f_2-f_0)$.

It is to be noted that there is usually an uncertainty of the actual instantaneous frequency of the first and second lasers (typically +/-1 GHz if these lasers are external cavity lasers) as well as phase noise which represents the random fluctuations of the phase of each laser.

Thus, the first and second low pass filter used are typically 3 dB bandwidth of around B/2 Hz to filter the undesired neighbouring signals. These filters have also to consider the uncertainty of the lasers frequencies to not filter the edges of the desired signal. Typically, the cut-off frequency $f_c$ is equal to B/2 Hz with a precision of - 0 Hz / + 3 GHz. In fact, if the cut-off frequency $f_c$ is under B/2 Hz there will be a loss of information, and the uncertainty of laser are normally 1.5 GHz in telecom applications.

As shown in **Figures 8d and 9b,** both signals obtained at the output G1 and G2 of the first and second low pass filter LPF1 and LPF2 are corrupted by some nonlinearity, but as we have mentioned this can very low depending on the ratio between tone and signal power. This can also be completely or partially compensated in signal processing using nonlinear equalizers. Finally, we could potentially recover the unknown frequency as well as the random phase fluctuations coming from difference of nominal and actual frequency and phase noise. Usually this is done by a phase locked loop (PLL).

This works in the following way: we observe the signal corrupted by frequency and phase unknown rotation and we use prior knowledge of the structure of the signal to estimate its frequency and phase and we continuously update the first and second shifting elements respectively by a phase estimation $\theta_k$ for polarization along the first direction H and $\varphi_k$ for polarization along the second direction V.

Thus, each shifting element can be modelled by:

$\exp\{-j(2\pi k(f_1-f_0)/fs+\theta_k)\}$ for the first shifting element 21; and
$\exp\{-j(2\pi k(f_2-f_0)/fs+\Phi_k)\}$ for the second shifting element 22.

This estimation depends on the signal structure and is not detailed here since the invention refers to the general detector configuration for arbitrary signals. Additionally, other structures for recovery of frequency and phase can be used. Here we showed one based on feedback, but feedforward is also possible.

In order to avoid the superposition of the information concerning the first and second polarities, the predetermined frequencies $f_1$ and $f_2$ respect one of the following equations:

$$f_1 \leq f_0 - B/2 \text{ and } f_2 \leq f_1 - B \qquad (1);$$

or

$$f_1 \leq f_0 - B/2 \text{ and } f_2 \geq f_0 + |f_0-f_1| + B \qquad (2);$$

or

$$f_1 \geq f_0 + B/2 \text{ and } f_2 \geq f_1 + B \qquad (3);$$

or

$$f_1 \geq f_0 + B/2 \text{ and } f_2 \leq f_0 - |f_0-f_1| - B \qquad (4).$$

**Figure** 5 illustrates for example the case where the predetermined frequencies $f_1$ and $f_2$ respect equations (1).

Advantageously, the first direction H can correspond to the horizontal polarization and the second direction V to the vertical polarization or reciprocally the first direction can correspond to the vertical polarization and the second direction to the horizontal polarization.

Advantageously, the first and general embodiment of the optical full field detector and its variants can be generalized and applied to a multiplexed signal.

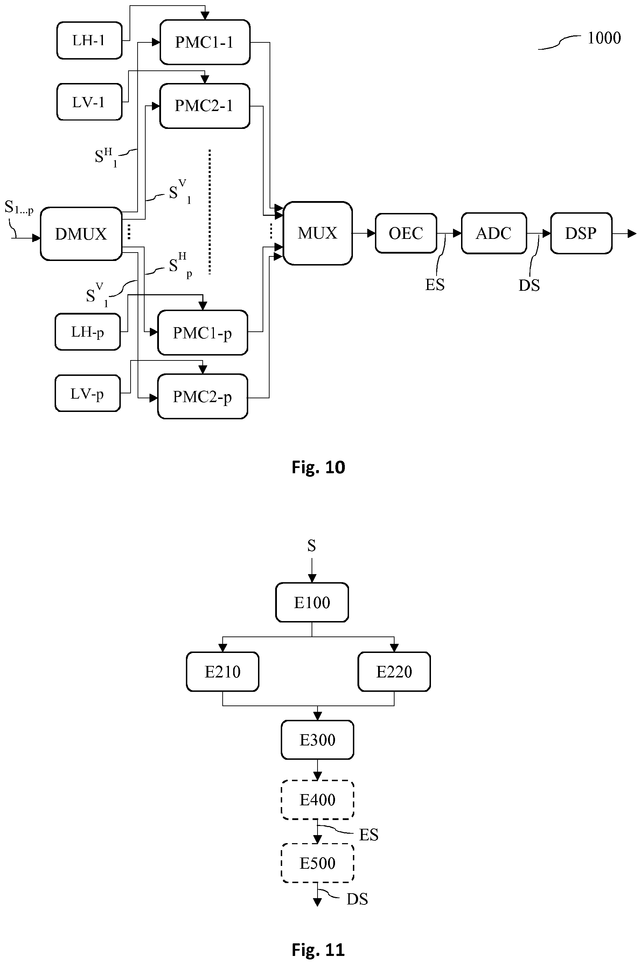

**Figure 10** illustrate a second embodiment of the optical full field detector 1000 for a multiplexed incoming optical signal $S_{1...p}$.

In this second embodiment 1000:

The incoming optical signal $S_{1...p}$ comprises p multiplexed optical signals, p being an integer superior or equal to 2, each optical signal having a central frequency $f_{0p}$ and a bandwidth $B_p$ and comprising n polarization states, n being an integer comprised between [0; 2].

As previously described, when n=1 the optical signal $S_p$ has one polarization state along a first or a second direction, when n=2 the optical signal $S_p$ has two polarization states, one along the first direction and the other along the second direction, the first and second direction being orthogonal, otherwise n=0.

The polarization beam splitter PBS is replaced by a demultiplexer DMUX adapted to demultiplex the incoming optical signal $S_{1...p}$ into 2p demultiplexed signals, p demultiplexed signals $S^H_{1...p}$ having a polarization state along the first direction H and p demultiplexed signals $S^V_{1...p}$ having a polarization state along the second direction V.

The first laser LH is replaced by p first lasers LH-1...p polarized along the first direction, each p first laser having predetermined frequency $f_{1p}$, and the second laser LV is replaced by p second lasers LV-1...p polarized along the second direction V, each p second laser having predetermined frequency $f_{2p}$.

The first and second polarization maintaining couplers PMC1 and MPC2 are replaced by p first and p second polarization maintaining couplers PCM1-1...p and PCM2-1...p, wherein the p first polarization maintaining couplers PCM1-1...p are adapted to couple the p polarized signals $S^H_{1...p}$ along the first direction H of the incoming optical signal $S_{1...p}$ with the first p lasers LH-1...p and maintain the polarization along the first direction H of these p first obtained signals, and the p second polarization maintaining couplers PCM2-1...p are adapted to couple the p polarized signals $S^V_{1...p}$ along the second direction V of the incoming optical signal $S_{1...p}$ with the second p lasers LV-1...p and maintain the polarization along the second direction V of these p second obtained signals.

The polarization beam combiner PBC is replaced by a multiplexer MUX adapted to multiplex the first and second p obtained signals into the coupled optical signal.

Finally, the digital signal processor DSP is adapted to extract from the digital signal DS the phase and amplitude of the n*p polarization states of the incoming optical signal $S_{1...p}$.

To extended the single opto-electronic detection idea for the first embodiment, now we have the following signals:

$$S^H_i(t) = Re\{s^H_{i\_bb}(t)*exp(j2\pi f_{0i}t)\} \qquad (Eq11)$$

$$S^V_i(t) = Re\{s^V_{i\_bb}(t)*exp(j2\pi f_{0i}t)\} \qquad (Eq12)$$

Which are indexed from i = 1, 2...p where p is the number of modes contained in the multiplexed incoming optical signal $S_{1...p}$ (p can go from a few modes to tens of modes).

After adding tones to each of the p modes, we obtain the following signals indexed from i=1.,2...p:

$$y^H_i(t) = s^H_i(t)+A_{1i}*cos(j2\pi f_{1i}t) \qquad (Eq13)$$

$$y^V_i(t) = s^V_i(t)+A_{2i}*cos(j2\pi f_{2i}t) \qquad (Eq14)$$

And after opto-electronic conversion we obtain all the signals multiplexed in frequency in the form:

$$I(t) \propto DC + NL + \Sigma\ Re\{s^H_{i\_bb}(t)*exp[j2\pi(f_{0i}-f_{1i})t]\}$$
$$+ \Sigma\ Re\{s^V_{i\_bb}(t)*exp[j2\pi(f_{0i}-f_{2i})t]\}$$
$$(Eq15)$$

where $\Sigma$ is the summation operator summing over i = {1, 2, 3...p}.

The invention also proposes an encoding method for encoding an incoming optical signal S as previously described, i.e. wherein the incoming optical signal S has a central frequency $f_0$ and a bandwidth B and comprises n polarization states, n being an integer comprised between [0; 2], when n=1 the incoming optical signal S has one polarization state along a first or a second direction H or V, when n=2 the incoming optical signal S has two polarization states, one along the first direction H and the other along the second direction V, the first and second direction being orthogonal, otherwise n=0.

The encoding method comprises four main steps as shown in **Figure 11.**

A polarization separating step E100 wherein the polarizations along the first and second direction of the incoming optical signal S are separated into a polarized signal along the first direction H and a polarized signal along the second direction V.

Then, in parallel:

- a first coupling step E210 wherein the polarized signal along the first direction H is coupled to a first laser LH, the first laser LH being polarized along the first direction H and having a predetermined frequency $f_1$; and
- a second coupling step E220 wherein the polarized signal along the second direction V is coupled to a second laser LV, the second laser being polarized along the second direction V and having a predetermined frequency $f_2$.

Then, a combining step E300 wherein the coupled signal obtained by the first and second coupling steps E210 and E220 are combined together by a polarization beam combiner PBM.

Advantageously, as explained in the description of the optical full field detector embodiment, the predetermined frequencies f1 and f2 respect one of the following equations:

$$f_1 \le f_0 - B/2 \text{ and } f_2 \le f_1 - B \qquad (1);$$

or

$$f_1 \le f_0 - B/2 \text{ and } f_2 \ge f_0 + |f_0\text{-}f_1| + B \qquad (2);$$

or

$$f_1 \ge f_0 + B/2 \text{ and } f_2 \ge f_1 + B \qquad (3);$$

or

$$f_1 \ge f_0 + B/2 \text{ and } f_2 \le f_0 - |f_0\text{-}f_1| - B \qquad (4).$$

Also advantageously, the first direction H may be horizontal and the second direction vertical or reciprocally the direction may be vertical and the second direction horizontal.

Advantageously, the encoding method further comprises an optical to analogical conversion step E400 wherein the optical combined signal obtained after the combining step E300 is converted into an electrical signal ES by an opto-electronic converter OEC. For example the opto-electronic converter OEC can be a photodiode.

Advantageously, the encoding method further comprises an analogical to digital conversion step E500 wherein the electrical signal ES obtained after the optical to analogical conversion step E400 is converted into a digital signal DS by an analog-to-digital converter ADC.

The invention also proposes a decoding method for decoding an incoming optical signal encoded according to the encoding method as described above.

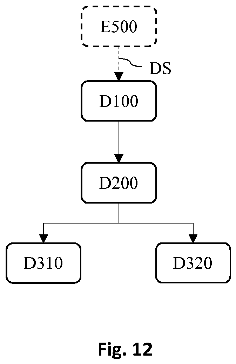

The decoding method comprises four main steps as shown in **Figure 12.**

A first filtering step D100 wherein the continuous component of the digital signal DS obtained at the end of the encoding method is filtered.

A dividing step D200 wherein the filtered signal obtained after the first filtering step D100 is divided into two identical sub-digital signals S-DS1 and S-DS2 by a coupler 10.

Then, in parallel:

- a first analyzing step D310 wherein one of the sub-digital signals S-DS1 is shifted in frequency so that a first low pass filter LPF1, having a cut-off frequency $f_c$ approximately equal to B/2, be adapted to filter the part of the sub-digital signal S-DS1 which contains the information of the phase and amplitude of the polarization state along the first direction H of the incoming optical signal S;
- a second analyzing step D320 wherein the other sub-digital signal S-DS2 is shifted in frequency so that a second low pass filter LPF2, having a cut-off frequency $f_c$ approximately equal to B/2, be adapted to filter the part of the sub-digital signal S-DS2 which contains the information of the phase and amplitude of the polarization state along the second direction V of the incoming optical signal S.

Typically, the cut-off frequency fc is equal to B/2 Hz with a precision of - 0 Hz / + 3 GHz, as explained previously.

As explained in the description of the optical full field detector embodiment, the encoding and decoding methods can be generalized to encode and decode a multiplexed signal having p signals multiplexed together each signals comprising n polarization states.

Thus, this invention differs from the cited prior art in the following way. In the polarization-diversity coherent detection, one laser with frequency $f_L$ would feed both couplers (90° optical hybrid). Also, the output of the couplers would feed two independent photodiodes followed by a 4x4 analog-to-digital converter (four inputs and four outputs). In the present application, a single photodiode and a single and "simple" 1x1 (only one input and one output) analog-to-digital converter are used thanks to the careful choice of laser frequencies and sufficient band of the components.

The description and drawings merely illustrate the principles of the invention. It will thus be appreciated that those skilled in the art will be able to devise various arrangements that, although not explicitly described or shown herein,

**EP 3 490 168 B1**

embody the principles of the invention and are included within its scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**REFERENCES NUMERALS**

    1 Optical signal
    2 Electrical current
    4x4 ADC 4x4 Analog-to-Digital Converter (4 inputs, 4 outputs)
    10 Coupler
    21 First Shifting Element
    22 Second Shifting Element
    90_X 90° optical hybrid in polarization X
    90_Y 90° optical hybrid in polarization Y
    100 Optical Full Field Detector according to a first and general embodiment
    1000 Optical Full Field Detector according to a second embodiment
    A, B', C, D, E, F1-F2, G1-G2 Measurement Points
    B Bandwidth
    ADC Analog-to-Digital Converter
    BPD1-BPD4 Balanced PhotoDiodes 1 to 4
    DDD Direct Detection Device
    DC Constant Value
    DCB First filter (Direct Coupling Blocker)
    DMUX Demultiplexer
    DS Digital Signal
    DSP Digital Signal Processor
    Dxxx Decoding Step xxx
    ES Electrical Signal
    Eyyy Encoding Step yyy
    I_X In-phase of the optical signal 1 in polarization X
    I_Y In-phase of the optical signal 1 in polarization Y
    LH first Laser polarized along a first direction H
    LV second Laser polarized along a second direction V
    LPF1-LPF1 Low-Pass Filter 1 and 2
    MUX Multiplexer
    NL Non-Linear term
    OEC Opto-Electronical Converter
    PBC Polarization Beam Combiner
    PBS Polarization Beam Splitter
    PD PhotoDiode
    PDCD Polarization-Diversity Coherent Detector
    PMC1-PMC2 Polarization Maintaining Couplers 1 and 2
    PS1-PS2 Polarization splitters 1 and 2
    Q_X Quadrature of the optical signal 1 in polarization X
    Q_Y Quadrature of the optical signal 1 in polarization Y
    S Incoming Optical Signal
    $S_{1...p}$ Multiplexed Incoming Optical Signal
    S-DS1, S-DS2 Sub-Digital Signals 1 and 2

**Claims**

1. An optical full field detector (100) for an incoming optical signal (S), said incoming optical signal (S) having a central frequency $f_0$ and a bandwidth B and comprising n polarization states, n being an integer comprised between [0; 2], when n=1 the incoming optical signal (S) has one polarization state along a first or a second direction (H or V), when n=2 the incoming optical signal (S) has two polarization states, one along the first direction (H) and the other along the second direction (V), the first and second directions (H and V) being orthogonal, otherwise n=0; the optical full field detector (100) being adapted to simultaneously detect the phase and amplitude of the polarization states of the incoming optical signal (S), the optical full field detector (100) comprising:

- a polarization beam splitter (PBS) adapted to receive and split the incoming optical signal (S) in two polarized signals by separating the polarization states along the first and second directions (H and V);
- a first laser (LH) polarized along the first direction (H) and having a predetermined frequency $f_1$;
- a second laser (LV) polarized along the second direction (V) and having a predetermined frequency $f_2$;
- a first and a second polarization maintaining coupler (PMC1 and PMC2);
- a polarization beam combiner (PBC);
- one opto-electronic converter (OEC);
- one analog-to-digital converter (ADC); and
- a digital signal processor (DSP),

wherein

- the first polarization maintaining coupler (PMC1) is adapted to couple the polarized signal along the first direction (H) of the incoming optical signal (S) with the first laser (LH) and maintain the polarization along the first direction (H) of this first obtained signal, and the second polarization maintaining coupler (PMC2) is adapted to couple the polarized signal along the second direction (V) of the incoming optical signal (S) with the second laser (LV) and maintain the polarization along the second direction (V) of this second obtained signal;
- the polarization beam combiner (PBC) is adapted to combine the first and second obtained signals into a coupled optical signal;
- the opto-electronic converter (OEC) is adapted to receive and convert the coupled optical signal into an electrical signal (ES);
- the analog-to-digital converter (ADC) is adapted to receive and convert the electrical signal (ES) into a digital signal (DS); and
- the digital signal processor (DSP) is adapted to receive the digital signal (DS) and to extract from the digital signal (DS) the phase and amplitude of the n polarization states of the incoming optical signal (S).

2. The optical full field detector (100) according to claim 1 wherein the predetermined frequencies $f_1$ and $f_2$ respect one of the following equations :

$$f_1 \leq f_0 - B/2 \text{ and } f_2 \leq f_1 - B \qquad (1);$$

or

$$f_1 \leq f_0 - B/2 \text{ and } f_2 \geq f_0 + |f_0 - f_1| + B \qquad (2);$$

or

$$f_1 \geq f_0 + B/2 \text{ and } f_2 \geq f_1 + B \qquad (3);$$

or

$$f_1 \geq f_0 + B/2 \text{ and } f_2 \leq f_0 - |f_0 - f_1| - B \qquad (4).$$

3. The optical full field detector (100) according to anyone of claims 1 to 2 wherein the first direction (H) is horizontal and the second direction (V) is vertical or reciprocally the first direction (H) is vertical and the second direction (V) is horizontal.

4. The optical full field detector (100) according to anyone of claims 1 to 3 wherein the digital signal processor (DSP)

comprises:

. a first filter (DCB) adapted to filter a constant value of the digital signal (DS);
- a coupler (10) adapted to divide the digital signal (DS) obtained at the output of the first filter (DCB) into two identical sub-digital signals (S-DS1 and S-DS2);
- a first and a second shifting elements (21 and 22); and
- a first and second low pass filters (LPF1 and LPF2) having a cut-off frequency $f_c$ approximatively equal to B/2,

wherein,

- the first shifting element (21) is adapted to shift in frequency one of the sub-digital signal (S-DS1) so that the first low pass filter (LPF1) is adapted to filter the part of the sub-digital signal (S-DS1) which contains the information of the phase and amplitude of the polarization state along the first direction (H) of the incoming optical signal (S); and
- the second shifting element (22) is adapted to shift in frequency the other sub-digital signal (S-DS2) so that the second low pass filter (LPF2) is adapted to filter the part of the sub-digital signal (S-DS2) which contains the information of the phase and amplitude of the polarization state along the second direction (V) of the incoming optical signal (S).

5. The optical full field detector (1000) according to anyone of claims 1 to 4, wherein:

- the incoming optical signal ($S_{1...p}$) comprises p multiplexed optical signals, p being an integer, each optical signals having a central frequency $f_{0p}$ and a bandwidth $B_p$ and comprising n polarization states, n being an integer comprised between [0; 2], when n=1 the optical signal has one polarization state along a first or a second direction (H or V), when n=2 the optical signal has two polarization states, one along the first direction (H) and the other along the second direction (V), the first and second directions (H and V) being orthogonal, otherwise n=0;
- the polarization beam splitter (PBS) is replaced by a demultiplexer (DMUX) adapted to demultiplex the incoming optical signal ($S_{1...p}$) into 2p demultiplexed signals, p demultiplexed signals having a polarization state along the first direction (H) and p demultiplexed signals having a polarization state along the second direction (V);
- the first laser (LH) is replaced by p first lasers (LH-1 to LH-p) polarized along the first direction (H), each p first laser having predetermined frequency $f_{1p}$;
- the second laser (LV) is replaced by p second lasers (LV-1 to LV-p) polarized along the second direction (V), each p second laser having predetermined frequency $f_{2p}$;
- the first and second polarization maintaining couplers (PMC1 and PMC2) are replaced by p first and p second polarization maintaining couplers (PMC1-1 to PMC1-p and PMC2-1 to PMC2-p), wherein the p first polarization maintaining couplers (PMC1-1 to PMC1-p) are adapted to couple the p polarized signals along the first direction (H) of the incoming optical signal ($S_{1...p}$) with the first p lasers and maintain the polarization along the first direction (H) of these p first obtained signals, and the p second polarization maintaining couplers (PMC2-1 to PMC2-p) are adapted to couple the p polarized signals along the second direction (V) of the incoming optical signal ($S_{1...p}$) with the second p lasers and maintain the polarization along the second direction (V) of these p second obtained signals;
- the polarization beam combiner (PBC) is replaced by a multiplexer (MUX) adapted to multiplex the first and second p obtained signals into the coupled optical signal; and wherein
- the digital signal processor (DSP) is adapted to extract from the digital signal (DS) the phase and amplitude of the n*p polarization states of the incoming optical signal ($S_{1...p}$).

6. An encoding method for encoding an incoming optical signal (S),
said incoming optical signal (S) having a central frequency $f_0$ and a bandwidth B and comprising n polarization states, n being an integer comprised between [0; 2], when n=1 the incoming optical signal (S) has one polarization state along a first or a second direction (H or V), when n=2 the incoming optical signal (S) has two polarization states, one along the first direction (H) and the other along the second direction (V), the first and second direction (H and V) being orthogonal, otherwise n=0; the encoding method comprising:

- a polarization separating step (E100) wherein the polarizations along the first and second directions (H and V) of the incoming optical signal (S) are separated into a polarized signal along the first direction (H) and a polarized signal along the second direction (V); and in parallel
- a first coupling step (E210) wherein the polarized signal along the first direction (H) is coupled to a first laser (LH), the first laser (LH) being polarized along the first direction (H) and having a predetermined frequency $f_1$

- a second coupling step (E220) wherein the polarized signal along the second direction (V) is coupled to a second laser (LV), the second laser (LV) being polarized along the second direction (V) and having a predetermined frequency $f_2$; then
- a combining step (E300) wherein the coupled signal obtained by the first and second coupling steps are combined together by a polarization beam combiner (PBC).

7. The encoding method according to claim 6 wherein the predetermined frequencies $f_1$ and $f_2$ respect one of the following equations:

$$f_1 \leq f_0 - B/2 \text{ and } f_2 \leq f_1 - B \qquad (1);$$

or

$$f_1 \leq f_0 - B/2 \text{ and } f_2 \geq f_0 + |f_0 - f_1| + B \qquad (2);$$

or

$$f_1 \geq f_0 + B/2 \text{ and } f_2 \geq f_1 + B \qquad (3);$$

or

$$f_1 \geq f_0 + B/2 \text{ and } f_2 \leq f_0 - |f_0 - f_1| - B \qquad (4).$$

8. The encoding method according to anyone of claims 6 to 7 wherein the first direction (H) is horizontal and the second direction (V) is vertical or reciprocally the first direction (H) is vertical and the second direction (V) is horizontal.

9. The encoding method according to anyone of claims 6 to 8 further comprising an optical to analogical conversion step (E400) wherein the optical combined signal obtained after the combining step (E300) is converted into an electrical signal (ES) by an opto-electronic converter (OEC).

10. The encoding method according to anyone of claims 6 to 9 further comprising an analogical to digital conversion step (E500) wherein the electrical signal (ES) obtained after the optical to analogical conversion step (E400) is converted into a digital signal (DS) by an analog-to-digital converter (ADC).

11. A decoding method for decoding an incoming optical signal (S) encoded according to the encoding method of claim 10, comprising:

- a first filtering step (D100) wherein the continuous component of the digital signal (DS) obtained at the end of the encoding method is filtered;
- a dividing step (D200) wherein the filtered signal obtained after the first filtering step is divided into two identical sub-digital signals (S-DS1 and S-DS2) by a coupler (10); and in parallel
- a first analyzing step (D310) wherein one of the sub-digital signals (S-DS1) is shifted in frequency so that a first low pass filter (LPF1), having a cut-off frequency $f_c$ approximately equal to B/2, be adapted to filter the part of the sub-digital signal (S-DS1) which contains the information of the phase and amplitude of the polarization state along the first direction (H) of the incoming optical signal (S); and
- a second analyzing step (D320) wherein the other sub-digital signal (S-DS2) is shifted in frequency so that a second low pass filter (LPF2), having a cut-off frequency $f_c$ approximately equal to B/2, be adapted to filter the part of the sub-digital signal (S-DS2) which contains the information of the phase and amplitude of the polarization state along the second direction (V) of the incoming optical signal (S).

**Patentansprüche**

1. Optischer Vollfelddetektor (100) für ein eingehendes optisches Signal (S),

wobei das eingehende optische Signal (S) eine Mittenfrequenz $f_0$ und eine Bandbreite B aufweist und n Polarisation-Zustände umfasst, wobei n eine ganze Zahl ist, die zwischen [0;2] enthalten ist, wobei, wenn n=1 gilt, das eingehende optische Signal (S) einen Polarisationszustand entlang einer ersten oder einer zweiten Richtung (H oder V) aufweist, wenn n=2 gilt, das eingehende optische Signal (S) zwei Polarisationszustände, einen entlang der ersten Richtung (H) und den anderen entlang der zweiten Richtung (V), aufweist, wobei die erste und zweite Richtung (H und V) orthogonal sind, ansonsten n=0 gilt;

wobei der optische Vollfelddetektor (100) zum gleichzeitigen Detektieren der Phase und Amplitude der Polarisationszustände des eingehenden optischen Signals (S) eingerichtet ist, wobei der optische Vollfelddetektor (100) Folgendes umfasst:

- einen Polarisationsstrahlteiler (PBS), der zum Empfangen und Teilen des eingehenden optischen Signals (S) in zwei polarisierte Signale durch Separieren der Polarisationszustände entlang der ersten und zweiten Richtung (H und V) eingerichtet ist;
- einen ersten Laser (LH), der entlang der ersten Richtung (H) polarisiert ist und eine vorbestimmte Frequenz $f_1$ aufweist;
- einen zweiten Laser (LV), der entlang der zweiten Richtung (V) polarisiert ist und eine vorbestimmte Frequenz $f_2$ aufweist;
- einen ersten und einen zweiten polarisationsbeibehaltenden Koppler (PMC1 und PMC2);
- einen Polarisationsstrahlkombinierer (PBC);
- einen optoelektronischen Wandler (OEC);
- einen Analog-Digital-Umsetzer (ADC); und
- einen Digitalsignalprozessor (DSP),

wobei

- der erste polarisationsbeibehaltende Koppler (PMC1) zum Koppeln des polarisierten Signals entlang der ersten Richtung (H) des eingehenden optischen Signals (S) mit dem ersten Laser (LH) und Beibehalten der Polarisation entlang der ersten Richtung (H) dieses ersten erhaltenen Signals eingerichtet ist, und der zweite polarisationsbeibehaltende Koppler (PMC2) zum Koppeln des polarisierten Signals entlang der zweiten Richtung (V) des eingehenden optischen Signals (S) mit dem zweiten Laser (LV) und Beibehalten der Polarisation entlang der zweiten Richtung (V) dieses zweiten erhaltenen Signals eingerichtet ist;
- der Polarisationsstrahlkombinierer (PBC) zum Kombinieren des ersten und zweiten erhaltenen Signals zu einem gekoppelten optischen Signal eingerichtet ist;
- der optoelektronische Wandler (OEC) zum Empfangen und Umwandeln des gekoppelten optischen Signals zu einem elektrischen Signal (ES) eingerichtet ist;
- der Analog-Digital-Umsetzer (ADC) zum Empfangen und Umsetzen des elektrischen Signals (ES) in ein Digitalsignal (DS) eingerichtet ist; und
- der Digitalsignalprozessor (DSP) zum Empfangen des Digitalsignals (DS) und Extrahieren der Phase und Amplitude der n Polarisationszustände des eingehenden optischen Signals (S) aus dem Digitalsignal (DS) eingerichtet ist.

2. Optischer Vollfelddetektor (100) nach Anspruch 1, wobei die vorbestimmten Frequenzen $f_1$ und $f_2$ einer der folgenden Gleichungen entsprechen:

$$f_1 \leq f_0{-}B/2 \ \text{ und } \ f_2 \leq f_1{-}B \qquad\qquad (1);$$

oder

$$f_1 \leq f_0{-}B/2 \ \text{ und } \ f_2 \geq f_0{+}\left|f_0{-}f_1\right|{+}B \qquad\qquad (2);$$

oder

$$f_1 \geq f_0{+}B/2 \ \text{ und } \ f_2 \geq f_1{+}B \qquad\qquad (3);$$

oder

$$f_1 \geq f_0+B/2 \text{ und } f_2 \leq f_0-\left|f_0-f_1\right|-B \qquad (4).$$

**3.** Optischer Vollfelddetektor (100) nach einem der Ansprüche 1 bis 2, wobei die erste Richtung (H) horizontal ist und die zweite Richtung (V) vertikal ist oder umgekehrt die erste Richtung (H) vertikal ist und die zweite Richtung (V) horizontal ist.

**4.** Optischer Vollfelddetektor (100) nach einem der Ansprüche 1 bis 3, wobei der Digitalsignalprozessor (DSP) Folgendes umfasst:

- ein erstes Filter (DCB), das zum Filtern eines konstanten Wertes des Digitalsignals (DS) eingerichtet ist;
- einen Koppler (10), der zum Teilen des an dem Ausgang des ersten Filters (DCB) erhaltenen Digitalsignals (DS) in zwei identische Subdigitalsignale (S-DS1 und S-DS2) eingerichtet ist;
- ein erstes und ein zweites Verschiebungselement (21 und 22); und
- ein erstes und zweites Tiefpassfilter (LPF1 und LPF2) mit einer Grenzfrequenz $f_c$ näherungsweise gleich B/2, wobei
- das erste Verschiebungselement (21) zum Frequenzverschieben des Subdigitalsignals (S-DS1) eingerichtet ist, so dass das erste Tiefpassfilter (LPF1) zum Filtern des Teils des Subdigitalsignals (S-DS1) eingerichtet ist, der die Informationen der Phase und Amplitude des Polarisationszustands entlang der ersten Richtung (H) des eingehenden optischen Signals (S) enthält; und
- das zweite Verschiebungselement (22) zum Frequenzverschieben des anderen Subdigitalsignals (S-DS2) eingerichtet ist, so dass das zweite Tiefpassfilter (LPF2) zum Filtern des Teils des Subdigitalsignals (S-DS2) eingerichtet ist, der die Informationen der Phase und Amplitude des Polarisationszustands entlang der zweiten Richtung (V) des eingehenden optischen Signals (S) enthält.

**5.** Optischer Vollfelddetektor (1000) nach einem der Ansprüche 1 bis 4, wobei:

- das eingehende optische Signal ($S_{1...p}$) p gemultiplexte optische Signale umfasst, wobei p eine ganze Zahl ist, wobei jedes optische Signal eine Mittenfrequenz $f_{0p}$ und eine Bandbreite $B_p$ aufweist und n Polarisationszustände umfasst, wobei n eine ganze Zahl ist, die zwischen [0; 2] enthalten ist, wobei, wenn n=1 gilt, das optische Signal einen Polarisationszustand entlang einer ersten oder einer zweiten Richtung (H oder V) aufweist, wenn n=2 gilt, das optische Signal zwei Polarisationszustände, einen entlang der ersten Richtung (H) und den anderen entlang der zweiten Richtung (V), aufweist, wobei die erste und zweite Richtung (H und V) orthogonal sind, ansonsten n=0 gilt;
- der Polarisationsstrahlteiler (PBS) durch einen Demultiplexer (DMUX) ersetzt ist, der zum Demultiplexen des eingehenden optischen Signals ($S_{1...p}$) in 2p gedemultiplexte Signale eingerichtet ist, wobei p gedemultiplexte Signale einen Polarisationszustand entlang der ersten Richtung (H) aufweisen und p gedemultiplexte Signale einen Polarisationszustand entlang der zweiten Richtung (V) aufweisen,
- der erste Laser (LH) durch p erste Laser (LH-1 bis LHp) ersetzt ist, die entlang der ersten Richtung (H) polarisiert sind, wobei p erste Laser jeweils eine vorbestimmte Frequenz $f_{1p}$ aufweisen;
- der zweite Laser (LV) durch p zweite Laser (LV-1 bis LV-p) ersetzt ist, die entlang der zweiten Richtung (V) polarisiert sind, wobei p zweite Laser jeweils eine vorbestimmte Frequenz $f_{2p}$ aufweisen;
- der erste und zweite polarisationsbeibehaltende Koppler (PMC1 und PMC2) durch p erste und p zweite polarisationsbeibehaltende Koppler (PMC1-1 bis PMC1-p und PMC2-1 bis PMC2-p) ersetzt sind, wobei die p ersten polarisationsbeibehaltenden Koppler (PMC1-1 bis PMC1-p) zum Koppeln der p polarisierten Signale entlang der ersten Richtung (H) des eingehenden optischen Signals ($S_{1...p}$) mit den ersten p Lasern und Beibehalten der Polarisation entlang der ersten Richtung (H) dieser p ersten erhaltenen Signale eingerichtet sind, und die p zweiten polarisationsbeibehaltenden Koppler (PMC2-1 bis PMC2-p) zum Koppeln der p polarisierten Signale entlang der zweiten Richtung (V) des eingehenden optischen Signals ($S_{1...p}$) mit den zweiten p Lasern und Beibehalten der Polarisation entlang der zweiten Richtung (V) dieser p zweiten erhaltenen Signale eingerichtet sind;
- der Polarisationsstrahlkombinierer (PBC) durch einen Multiplexer (MUX) ersetzt ist, der zum Multiplexen der ersten und zweiten p erhaltenen Signale zu dem gekoppelten optischen Signal eingerichtet ist; und wobei
- der Digitalsignalprozessor (DSP) zum Extrahieren der Phase und Amplitude der n*p Polarisationszustände des eingehenden optischen Signals ($S_{1...p}$) aus dem digitalen Signal (DS) eingerichtet ist.

**6.** Codierungsverfahren zum Codieren eines eingehenden optischen Signals (S) wobei das eingehende optische Signal (S) eine Mittenfrequenz $f_0$ und eine Bandbreite B aufweist und n Polarisation-Zustände umfasst, wobei n eine ganze Zahl ist, die zwischen [0;2] enthalten ist, wobei, wenn n=1 gilt, das eingehende optische Signal (S) einen Polarisationszustand entlang einer ersten oder einer zweiten Richtung (H oder V) aufweist, wenn n=2 gilt, das eingehende optische Signal (S) zwei Polarisationszustände, einen entlang der ersten Richtung (H) und den anderen entlang der zweiten Richtung (V), aufweist, wobei die erste und zweite Richtung (H und V) orthogonal sind, ansonsten n=0 gilt;
wobei das Codierungsverfahren Folgendes umfasst:

- einen Polarisationsseparationsschritt (E100), in dem die Polarisationen entlang der ersten und zweiten Richtung (H und V) des eingehenden optischen Signals (S) in ein polarisiertes Signal entlang der ersten Richtung (H) und ein polarisiertes Signal entlang der zweiten Richtung (V) separiert werden; und parallel dazu
- einen ersten Kopplungsschritt (E210), in dem das polarisierte Signal entlang der ersten Richtung (H) mit einem ersten Laser (LH) gekoppelt wird, wobei der erste Laser (LH) entlang der ersten Richtung (H) polarisiert ist und eine vorbestimmte Frequenz $f_1$ aufweist;
- einen zweiten Kopplungsschritt (E220), in dem das polarisierte Signal entlang der zweiten Richtung (V) mit einem zweiten Laser (LV) gekoppelt wird, wobei der zweite Laser (LV) entlang der zweiten Richtung (V) polarisiert ist und eine vorbestimmte Frequenz $f_2$ aufweist; dann
- einen Kombinationsschritt (E300), in dem die durch den ersten und zweiten Kopplungsschritt erhaltenen gekoppelten Signale durch einen Polarisationsstrahlkombinierer (PBC) miteinander kombiniert werden.

7. Codierungsverfahren nach Anspruch 6, wobei die vorbestimmten Frequenzen $f_1$ und $f_2$ einer der folgenden Gleichungen entsprechen:

$$f_1 \leq f_0 - B/2 \quad und \quad f_2 \leq f_1 - B \qquad (1);$$

oder

$$f_1 \leq f_0 - B/2 \quad und \quad f_2 \geq f_0 + \left| f_0 - f_1 \right| + B \qquad (2);$$

oder

$$f_1 \geq f_0 + B/2 \quad und \quad f_2 \geq f_1 + B \qquad (3);$$

oder

$$f_1 \geq f_0 + B/2 \quad und \quad f_2 \leq f_0 - \left| f_0 - f_1 \right| - B \qquad (4).$$

8. Codierungsverfahren nach einem der Ansprüche 6 bis 7, wobei die erste Richtung (H) horizontal ist und die zweite Richtung (V) vertikal ist oder umgekehrt die erste Richtung vertikal (H) ist und die zweite Richtung (V) horizontal ist.

9. Codierungsverfahren nach einem der Ansprüche 6 bis 8, das fernen einen Optisch-zu-Analog-Umwandlungsschritt (E400) umfasst, wobei das optische kombinierte Signal, das nach dem Kombinationsschritt (E300) erhalten wurde, durch einen optoelektronischen Umwandler(OEC) in ein elektrisches Signal (ES) umgewandelt wird.

10. Codierungsverfahren nach einem der Ansprüche 6 bis 9, das ferner einen Analog-zu-Digital-Umsetzungsschritt (E500) umfasst, wobei das elektrische Signal (ES), das nach dem Optisch-zu-Analog-Umwandlungsschritt (E400) erhalten wurde, durch einen Analog-Digital-Umsetzer (ADC) in ein Digitalsignal (DS) umgesetzt wird.

11. Decodierungsverfahren zum Decodieren eines eingehenden optischen Signals (S), das gemäß dem Codierungsverfahren nach Anspruch 10 codiert wurde, welches Folgendes umfasst:

- einen Filterschritt (D100), in dem die kontinuierliche Komponente des Digitalsignals (DS) gefiltert wird, das am Ende des Codierungsverfahrens erhalten wurde;
- einen Teilungsschritt (D200), in dem das gefilterte Signal, das nach dem ersten Filterschritt erhalten wurde, durch einen Koppler (10) in zwei identische Subdigitalsignale (S-DS1 und S-DS2) geteilt wird; und parallel dazu

- einen ersten Analyseschritt (D310), in dem eines der Subdigitalsignale (S-DS1) frequenzverschoben wird, so dass ein erstes Tiefpassfilter (LPF1) mit einer Grenzfrequenz $f_c$ näherungsweise gleich B/2 zum Filtern des Teils des Subdigitalsignals (S-DS1) eingerichtet ist, der die Informationen der Phase und Amplitude des Polarisationszustands entlang der ersten Richtung (H) des eingehenden optischen Signals (S) enthält; und
- einen zweiten Analyseschritt (D320), in dem das andere Subdigitalsignal (S-DS2) frequenzverschoben wird, so dass ein zweites Tiefpassfilter (LPF2) mit einer Grenzfrequenz $f_c$ näherungsweise gleich B/2 zum Filtern des Teils des Subdigitalsignals (S-DS2) eingerichtet ist, der die Informationen der Phase und Amplitude des Polarisationszustands entlang der zweiten Richtung (V) des eingehenden optischen Signals (S) enthält.

**Revendications**

1. Détecteur optique plein champ (100) pour un signal optique incident (S),
   ledit signal optique incident (S) ayant une fréquence centrale $f_0$ et une largeur de bande B et comprenant n états de polarisation, n étant un entier compris entre [0 ; 2], quand n=1 le signal optique incident (S) a un état de polarisation le long d'une première ou d'une deuxième direction (H ou V), quand n=2 le signal optique incident (S) a deux états de polarisation, un le long de la première direction (H) et l'autre le long de la deuxième direction (V), les première et deuxième directions (H et V) étant orthogonales, sinon n=0 ;
   le détecteur optique plein champ (100) étant adapté pour détecter simultanément la phase et l'amplitude des états de polarisation du signal optique incident (S), le détecteur optique plein champ (100) comprenant :

   - un séparateur de faisceau de polarisation (PBS) adapté pour recevoir et séparer le signal optique incident (S) en deux signaux polarisés en séparant les états de polarisation le long des première et deuxième directions (H et V) ;
   - un premier laser (LH) polarisé le long de la première direction (H) et ayant une fréquence prédéterminée $f_1$ ;
   - un deuxième laser (LV) polarisé le long de la deuxième direction (V) et ayant une fréquence prédéterminée $f_2$ ;
   - un premier et un deuxième coupleur maintenant la polarisation (PMC1 et PMC2) ;
   - un combineur de faisceaux de polarisation (PBC) ;
   - un convertisseur optoélectronique (OEC) ;
   - un convertisseur analogique-numérique (ADC) ; et
   - un processeur du signal numérique (DSP),

   dans lequel

   - le premier coupleur maintenant la polarisation (PMC1) est adapté pour coupler le signal polarisé le long de la première direction (H) du signal optique incident (S) avec le premier laser (LH) et maintenir la polarisation le long de la première direction (H) de ce premier signal obtenu, et le deuxième coupleur maintenant la polarisation (PMC2) est adapté pour coupler le signal polarisé le long de la deuxième direction (V) du signal optique incident (S) avec le deuxième laser (LV) et maintenir la polarisation le long de la deuxième direction (V) de ce deuxième signal obtenu ;
   - le combineur de faisceaux de polarisation (PBC) est adapté pour combiner les premier et deuxième signaux obtenus en un signal optique couplé ;
   - le convertisseur optoélectronique (OEC) est adapté pour recevoir et convertir le signal optique couplé en un signal électrique (ES) ;
   - le convertisseur analogique-numérique (ADC) est adapté pour recevoir et convertir le signal électrique (ES) en un signal numérique (DS) ; et
   - le processeur du signal numérique (DSP) est adapté pour recevoir le signal numérique (DS) et pour extraire du signal numérique (DS) la phase et l'amplitude des n états de polarisation du signal optique incident (S).

2. Détecteur optique plein champ (100) selon la revendication 1 dans lequel les fréquences prédéterminées $f_1$ et $f_2$ respectent une des équations suivantes :

$$f_1 \leq f_0 - B/2 \text{ et } f_2 \leq f_1 - B \qquad (1) \; ;$$

ou

$$f_1 \leq f_0 - B/2 \quad \text{et} \quad f_2 \geq f_0 + |f_0 - f_1| + B \qquad (2) \; ;$$

ou

$$f_1 \geq f_0 + B/2 \quad \text{et} \quad f_2 \geq f_1 + B \qquad (3) \; ;$$

ou

$$f_1 \geq f_0 + B/2 \quad \text{et} \quad f_2 \leq f_0 - |f_0 - f_1| - B \qquad (4) .$$

**3.** Détecteur optique plein champ (100) selon l'une quelconque des revendications 1 à 2 dans lequel la première direction (H) est horizontale et la deuxième direction (V) est verticale, ou réciproquement la première direction (H) est verticale et la deuxième direction (V) est horizontale.

**4.** Détecteur optique plein champ (100) selon l'une quelconque des revendications 1 à 3 dans lequel le processeur du signal numérique (DSP) comprend :

- un premier filtre (DCB) adapté pour filtrer une valeur constante du signal numérique (DS) ;
- un coupleur (10) adapté pour diviser le signal numérique (DS) obtenu à la sortie du premier filtre (DCB) en deux sous-signaux numériques identiques (S-DS1 et S-DS2) ;
- un premier et un deuxième élément de décalage (21 et 22) ; et
- un premier et un deuxième filtre passe-bas (LPF1 et LPF2) ayant une fréquence de coupure $f_c$ approximativement égale à B/2,

dans lequel

- le premier élément de décalage (21) est adapté pour décaler en fréquence l'un des sous-signaux numériques (S-DS1) de telle sorte que le premier filtre passe-bas (LPF1) est adapté pour filtrer la partie du sous-signal numérique (S-DS1) qui contient les informations sur la phase et l'amplitude de l'état de polarisation le long de la première direction (H) du signal optique incident (S) ; et
- le deuxième élément de décalage (22) est adapté pour décaler en fréquence l'autre sous-signal numérique (S-DS2) de telle sorte que le deuxième filtre passe-bas (LPF2) est adapté pour filtrer la partie du sous-signal numérique (S-DS2) qui contient les informations sur la phase et l'amplitude de l'état de polarisation le long de la deuxième direction (V) du signal optique incident (S) .

**5.** Détecteur optique plein champ (100) selon l'une quelconque des revendications 1 à 4, dans lequel :

- le signal optique incident ($S_{1...p}$) comprend p signaux optiques multiplexés, p étant un entier, chaque signal optique ayant une fréquence centrale $f_{0p}$ et une largeur de bande $B_p$ et comprenant n états de polarisation, n étant un entier compris entre [0 ; 2], quand n=1 le signal optique a un état de polarisation le long d'une première ou d'une deuxième direction (H ou V), quand n=2 le signal optique a deux états de polarisation, un le long de la première direction (H) et l'autre le long de la deuxième direction (V), les première et deuxième directions (H et V) étant orthogonales, sinon n=0 ;
- le séparateur de faisceau de polarisation (PBS) est remplacé par un démultiplexeur (DMUX) adapté pour démultiplexer le signal optique incident ($S_{1...p}$) en 2p signaux démultiplexés, p signaux démultiplexés ayant un état de polarisation le long de la première direction (H) et p signaux démultiplexés ayant un état de polarisation le long de la deuxième direction (V) ;
- le premier laser (LH) est remplacé par p premiers lasers (LH-1 à LH-p) polarisés le long de la première direction (H), chaque premier laser p ayant une fréquence prédéterminée $f_{1p}$ ;
- le deuxième laser (LV) est remplacé par p deuxièmes lasers (LV-1 à LV-p) polarisés le long de la deuxième direction (V), chaque deuxième laser p ayant une fréquence prédéterminée $f_{2p}$ ;
- les premier et deuxième coupleurs maintenant la polarisation (PMC1 et PMC2) sont remplacés par p premiers et p deuxièmes coupleurs maintenant la polarisation (PMC1-1 à PMC1-p et PMC2-1 à PMC2-p), les p premiers coupleurs maintenant la polarisation (PMC1-1 à PMC1-p) étant adaptés pour coupler les p signaux polarisés le long de la première direction (H) du signal optique incident ($S_{1...p}$) avec les p premiers lasers et maintenir la polarisation le long de la première direction (H) de ces p premiers signaux obtenus, et les p deuxièmes coupleurs maintenant la polarisation (PMC2-1 à PMC2-p) étant adaptés pour coupler les p signaux polarisés le long de la deuxième direction (V) du signal optique incident ($S_{1...p}$) avec les p deuxièmes lasers et maintenir la polarisation le long de la deuxième direction (V) de ces p deuxièmes signaux obtenus ;

- le combineur de faisceaux de polarisation (PBC) est remplacé par un multiplexeur (MUX) adapté pour multiplexer les p premiers et deuxièmes signaux obtenus en le signal optique couplé ; et dans lequel

- le processeur du signal numérique (DSP) est adapté pour extraire du signal numérique (DS) la phase et l'amplitude des n*p états de polarisation du signal optique incident ($S_{1...p}$) .

6. Procédé de codage destiné à coder un signal optique incident (S),
   ledit signal optique incident (S) ayant une fréquence centrale $f_0$ et une largeur de bande B et comprenant n états de polarisation, n étant un entier compris entre [0 ; 2], quand n=1 le signal optique incident (S) a un état de polarisation le long d'une première ou d'une deuxième direction (H ou V), quand n=2 le signal optique incident (S) a deux états de polarisation, un le long de la première direction (H) et l'autre le long de la deuxième direction (V), la première et la deuxième direction (H et V) étant orthogonales, sinon n=0 ;
   le procédé de codage comprenant :

   - une étape de séparation de polarisations (E100) dans laquelle les polarisations le long des première et deuxième directions (H et V) du signal optique incident (S) sont séparées en un signal polarisé le long de la première direction (H) et un signal polarisé le long de la deuxième direction (V) ; et en parallèle
   - une première étape de couplage (E210) dans laquelle le signal polarisé le long de la première direction (H) est couplé à un premier laser (LH), le premier laser (LH) étant polarisé le long de la première direction (H) et ayant une fréquence prédéterminée $f_1$ ;
   - une deuxième étape de couplage (E220) dans laquelle le signal polarisé le long de la deuxième direction (V) est couplé à un deuxième laser (LV), le deuxième laser (LV) étant polarisé le long de la deuxième direction (V) et ayant une fréquence prédéterminée $f_2$ ; puis
   - une étape de combinaison (E300) dans laquelle les signaux couplés obtenus par les première et deuxième étapes de couplage sont combinés par un combineur de faisceaux de polarisation (PBC).

7. Procédé de codage selon la revendication 6, dans lequel les fréquences prédéterminées $f_1$ et $f_2$ respectent une des équations suivantes :

$$f_1 \leq f_0 - B/2 \text{ et } f_2 \leq f_1 - B \qquad (1) ;$$

ou

$$f_1 \leq f_0 - B/2 \text{ et } f_2 \geq f_0 + |f_0 - f_1| + B \qquad (2) ;$$

ou

$$f_1 \geq f_0 + B/2 \text{ et } f_2 \geq f_1 + B \qquad (3) ;$$

ou

$$f_1 \geq f_0 + B/2 \text{ et } f_2 \leq f_0 - |f_0 - f_1| - B \qquad (4).$$

8. Procédé de codage selon l'une quelconque des revendications 6 à 7 dans lequel la première direction (H) est horizontale et la deuxième direction (V) est verticale, ou réciproquement la première direction (H) est verticale et la deuxième direction (V) est horizontale.

9. Procédé de codage selon l'une quelconque des revendications 6 à 8 comprenant en outre une étape de conversion optique-analogique (E400) dans laquelle le signal optique combiné obtenu après l'étape de combinaison (E300) est converti en un signal électrique (ES) par un convertisseur optoélectronique (OEC).

10. Procédé de codage selon l'une quelconque des revendications 6 à 9 comprenant en outre une étape de conversion analogique-numérique (E500) dans laquelle le signal électrique (ES) obtenu après l'étape de conversion optique-analogique (E400) est converti en un signal numérique (DS) par un convertisseur analogique-numérique (ADC).

11. Procédé de décodage destiné à décoder un signal optique incident (S) codé selon le procédé de codage de la revendication 10, comprenant :

- une première étape de filtrage (D100) dans laquelle la composante continue du signal numérique (DS) obtenu à la fin du procédé de codage est filtrée ;
- une étape de division (D200) dans laquelle le signal filtré obtenu après la première étape de filtrage est divisé en deux sous-signaux numériques identiques (S-DS1 et S-DS2) par un coupleur (10) ; et en parallèle
- une première étape d'analyse (D310) dans laquelle un des sous-signaux numériques (S-DS1) est décalé en fréquence de telle sorte qu'un premier filtre passe-bas (LPF1), ayant une fréquence de coupure $f_c$ approximativement égale à B/2, soit adapté pour filtrer la partie du sous-signal numérique (S-DS1) qui contient les informations sur la phase et l'amplitude de l'état de polarisation le long de la première direction (H) du signal optique incident (S) ; et
- une deuxième étape d'analyse (D320) dans laquelle l'autre sous-signal numérique (S-DS2) est décalé en fréquence de telle sorte qu'un deuxième filtre passe-bas (LPF2), ayant une fréquence de coupure $f_c$ approximativement égale à B/2, soit adapté pour filtrer la partie du sous-signal numérique (S-DS2) qui contient les informations sur la phase et l'amplitude de l'état de polarisation le long de la deuxième direction (V) du signal optique incident (S).

DDD

1 → PD → 2

**Fig. 1 – Prior Art**

PDCD

1 → PS1

LO → PS2

90_X, 90_Y

BPD1
BPD2
BPD3
BPD4

4x4 ADC

I_X
Q_X
I_Y
Q_Y

**Fig. 2 – Prior Art**

**Fig. 3**

**Fig. 4**

**Fig. 5**

**Fig. 6**

**Fig. 7**

Fig. 8a

Fig. 8b

Fig. 8c

Fig. 8d

**Fig. 9a**

**Fig. 9b**

**Fig. 10**

**Fig. 11**

E500

DS

D100

D200

D310          D320

**Fig. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Dual Polarization In-Phase and Quadrature High Speed Submarine Transmission with Only Two Photodiodes, ADCs, MZMs and DACs. **R. MÜLLER ; J. ESTERAN et al.** Photonics Conference (IPC). IEEE, 2017